Europäisches Patentamt

European Patent Office

Office européen des brevets

(11) Veröffentlichungsnummer: **0 231 214**
**B1**

# EUROPÄISCHE PATENTSCHRIFT

(45) Veröffentlichungstag der Patentschrift:
**24.05.89**

(51) Int. Cl.⁴: **F 16 D 13/08**

(21) Anmeldenummer: **86904057.6**

(22) Anmeldetag: **08.07.86**

(86) Internationale Anmeldenummer:
**PCT/CH 86/00095**

(87) Internationale Veröffentlichungsnummer:
**WO 87/00594 (29.01.87 Gazette 87/3)**

(54) SCHLINGFEDER-KUPPLUNG.

(30) Priorität: **19.07.85 CH 3157/85**

(43) Veröffentlichungstag der Anmeldung:
**12.08.87 Patentblatt 87/33**

(45) Bekanntmachung des Hinweises auf die Patenterteilung:
**24.05.89 Patentblatt 89/21**

(84) Benannte Vertragsstaaten:
**DE FR GB IT LU NL SE**

(56) Entgegenhaltungen:
**DE-A- 456 656**
**GB-A- 2 795**
**GB-A- 679 245**
**US-A- 2 878 914**
**US-A- 2 951 568**
**US-A- 2 971 394**
**US-A- 4 418 811**

(73) Patentinhaber: **Baumann & Cie. AG, Ferrachstrasse 31, CH-8630 Rüti (CH)**

(72) Erfinder: **ITEN, Peter, Im Chramen 9, CH-8712 Stäfa (CH)**

(74) Vertreter: **Scheidegger, Zwicky, Werner & Co., Stampfenbachstrasse 48 Postfach, CH-8023 Zürich (CH)**

Beschreibung

Die Erfindung betrifft eine Schlingfeder-Kupplung mit einer Antriebsnabe und einer Abtriebsnabe sowie mit einer in zur Drehmomentübertragung geeigneter Weise koaxial zu den beiden Naben angeordneten Kupplungs-Schlingfeder, von welcher eine Teillänge mit Vorspannung auf der in einem Gehäuse drehbar gelagerten Abtriebsnabe aufliegt und eine weitere Teillänge im ausgekuppelten Zustand die an die Abtriebsnabe axial anschliessende und im Gehäuse drehbar gelagerte Antriebsnabe mit radialem Spiel umschliesst, sowie mit einer Schalthülse für die Kupplungsbetätigung.

Schlingfeder-Kupplungen werden meistens als Schaltkupplungen verwendet, die in der Regel über einen elektromagnetisch oder mechanisch betätigten Hebel und eine mit dem Hebel zusammenwirkende Nockenhülse der Kupplung aus- und eingekuppelt werden. Meistens wird eine Antriebsverbindung kurzzeitig unterbrochen, wenn durch Festhalten der Nockenhülse die Schlingfeder geöffnet und dadurch die Antriebsverbindung zwischen der Antriebsnabe und der Abtriebsnabe unterbrochen wird. Für diesen Typ der Schlingfeder-Kupplung mit normalerweise in ständiger Antriebsverbindung stehender Antriebsnabe und Abtriebsnabe ergibt sich durch die Verwendung einer Schlingfeder eine sehr einfache Konstruktion. Wenn umgekehrt jedoch die Antriebsverbindung nur bei betätigter Kupplung vorhanden sein soll, kommt man für einen solchen Typ einer Schlingfeder-Kupplung mit dem einfachen Konstruktionsprinzip nicht mehr aus.

Die vorliegende Erfindung betrifft eine Schlingfeder-Kupplung des letztgenannten Typs, bei der die Antriebsverbindung nur bei Betätigung zustande kommt. Aus der GB-A-898,183 ist eine Schlingfeder-Kupplung bekannt, bei der auf dem Aussenumfang einer die Kupplungs-Schlingfeder umschliessenden Schalthülse die bei getrennter Antriebsverbindung der Schlingfeder-Kupplung durch die mit einem Abschnitt auf der Antriebsnabe mit Vorspannung aufliegende und mit einem weiteren Abschnitt innenseitig gegen die Schalthülse anliegende Kupplungs-Schlingfeder mitgedreht wird, eine mit der Schalthülse mitdrehende Schliessfeder angeordnet ist, deren abgebogenes Federende gegen einen radial bewegten Betätigungsanschlag anfährt, so dass durch die dann mittels der Schliessfeder zurückgehaltene Schalthülse die Kupplungs-Schlingfeder geschlossen und die Antriebsverbindung hergestellt wird. Der entscheidende Nachteil dieser Konstruktion besteht jedoch darin, dass durch den Formschluss zwischen der Kupplungs-Schlingfeder und der Schalthülse zwischen dieser und der auf ihrem Umfang sitzenden und während der Einschaltphase durch den Betätigungsanschlag festgehaltenen Schliessfeder Reibung und damit Abnutzung entsteht, so dass diese Kupplung nur für kurze Einschaltphasen und sicher nicht für hohe Drehzahlen geeignet ist.

Eine Schlingfeder-Kupplung zum manuellen Ein- und Ausschalten mittels einer Schalthülse ist ferner aus der US-A-2,971,394 bekannt. Bei dieser Kupplung liegt eine Teillänge der Schlingfeder mit Vorspannung auf der einen Nabe auf, während die andere Teillänge der Schlingfeder sich über einen in axialer Richtung anschliessenden und im Durchmesser etwas kleineren Abschnitt und bis über einen konisch sich erweiternden Abschnitt der anderen Nabe erstreckt und mittels der Schalthülse in axialer Richtung zusammendrückbar ist so dass sich von der Einschlatstellung, in der der konische Abschnitt durch Mitnahme des Federendes die Schlingfeder-Teillänge auf die Nabe fest aufwickelt, in die Ausschlatstellung mit vom konischen Abschnitt weggedrücktem Federende gebracht wird, so dass die Teillänge dann die Nabe mit radialem Spiel umschliesst. Nachteilig ist hierbei, dass die Schlingfeder eine axial zusammendrückbare Teillänge und eine mit Vorspannung auf der einen Nabe fest aufliegende Teillänge aufweisen muss und dass das Einschalten über den konischen Nabenabschnitt kraftschlüssig und nicht formschlüssig erfolgt und auch nicht einstellbar bezüglich eines bestimmten Drehwinkels.

Die der vorliegenden Erfindung zugrundeliegende Aufgabe bestand daher darin, eine Schlingfeder-Kupplung zu schaffen, die für lange Einschaltphasen ohne Auftreten von Reibungsverschleiss geeignet ist, und bei der das Einschalten formschlüssig durch einen Mitnehmer erfolgt und bei hoher Drehzahl möglich ist, aber auch wiederum nicht schlagartig erfolgen darf. Zur Lösung dieser Aufgaben weist die Schlingfeder-Kupplung die Merkmale gemäss Anspruch 1 auf. Ausserdem soll gleichzeitig auch erreicht werden, dass bei getrennter Antriebsverbindung die Abtriebsnabe und die durch diese in Drehung versetzte Masse abgebremst wird, was mit den vorstehend erwähnten bekannten Kupplungen nicht möglich ist. Dies wird bei der erfindungsgemässen Kupplung durch die in bevorzugter Weise aus zwei Abschnitten mit unterschiedlich grossem Durchmesser bestehende Kupplungs-Schlingfeder erreicht, von der bei ausgeschalteter Kupplung eine Teillänge mit dem Aussenumfang mit Vorspannung innenseitig gegen eine Gehäusebohrung zur Anlage kommt.

Der Vorteil der erfindungsgemässen Kupplung besteht darin, dass das Einschalten der Kupplung nicht durch das mittels eines Anschlags bewirkte Festhalten einer zusätzlichen Schlingfeder erfolgt, sondern eine hier ebenfalls vorhandene weitere Schlingfeder mit Vorspannung auf der Antriebsnabe aufliegt und immer mitläuft und nur beim Einschaltvorgang durch das Anfahren gegen den Mitnehmer der Schalthülse kurzzeitig geöffnet wird und dabei durchrutscht, bis das konstante Reibungsmoment des Durchrutschens das vollständige Einkuppeln zur Folge hat, während anschliessend keinerlei Relativbewegung von Teilen vorhanden ist, die Reibung und Verschleiss bewirken kann. Daher kann die Kupplung beliebig lange eingekuppelt sein. Vor allem aber erlaubt diese Kupplung, das Einkuppeln mit einer wesentlich höheren Drehzahl durchzuführen, als dies mit bekannten Kupplungen dieser Art möglich ist. Wenn mit einer bekannten Kupplung eine bestimmte anzutreibende Masse mit maximal 200 Umdrehungen pro Minute eingekuppelt werden kann, so ermöglicht die erfindungsgemässe Kupplung, die gleiche Masse mit einer Drehzahl von 3000 Umdrehungen pro Minute oder noch höherer Drehzahl einzukuppeln.

Weitere Vorteile und Einzelheiten der Erfindung ergeben sich aus der nachfolgenden Beschreibung und den Zeichnungen, in denen eine Ausführungsform des Erfindungsgegenstandes rein beispielsweise dargestellt ist. Es zeigen:

Fig. 1 einen Axialschnitt durch die Schlingfeder-Kupplung gemäss der Linie II-II in Fig. 2, wobei die obere Hälfte der Figur den ausgekuppelten und die untere Hälfte den eingekuppelten Zustand zeigt;

Fig. 2 einen Teilquerschnitt gemäss Linie I-I und gemäss Linie III-III in Fig. 1;

Fig. 3 eine Ansicht der Kupplung gemäss Pfeilrichtung A in Fig. 2.

Die Schlingfeder-Kupplung weist eine Antriebswelle 1 auf, auf der mittels eines Keils 2 eine Antriebsnabe 3 drehfest angeordnet ist. Eine Abtriebsnabe 4 ist mittels zweier Wälzlager 5 und 6 auf dem Endabschnitt 7 der Antriebswelle 1 gelagert. Mittels einer Schraube 8 sind die Antriebsnabe 3 und die Abtriebsnabe 4 in axialer Richtung durch Anlage gegen den Bund 9 der Antriebswelle 1 gehalten, wobei zwischen der Antriebsnabe 3 und der Abtriebsnabe 4 das notwendige Spiel vorhanden ist. An der Abtriebsnabe 4 ist mittels Schrauben 10 die anzutreibende Masse 11 befestigt.

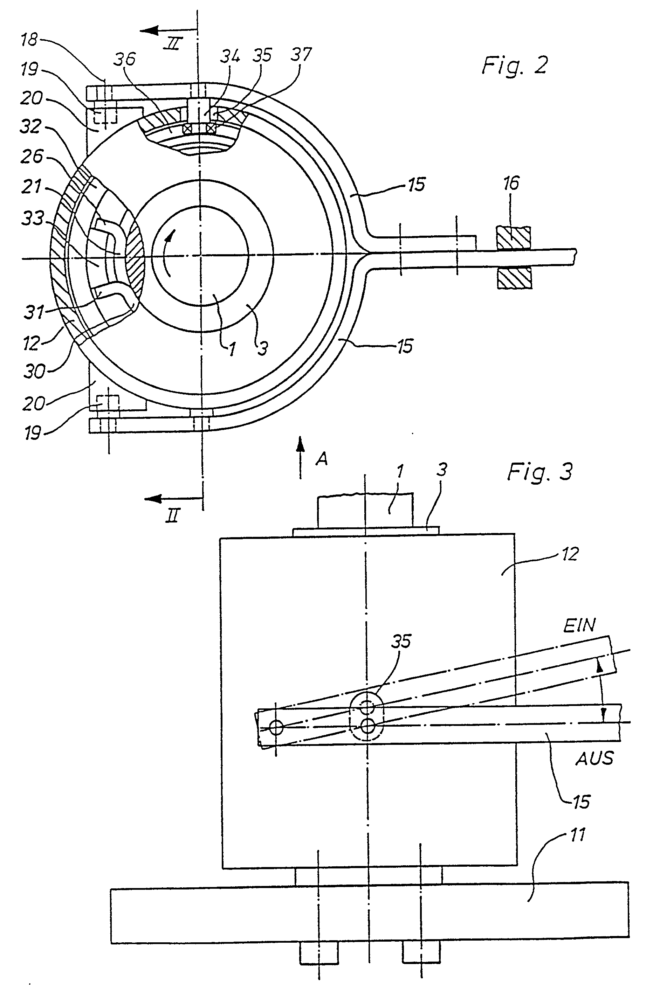

Ein Kupplungsgehäuse 12 ist mittels der beiden Wälzlager 13 und 14 auf der Antriebsnabe 3 und der Abtriebsnabe 4 gelagert. Das Kupplungsgehäuse 12 ist gegen Drehung durch einen in Fig. 2 besser erkennbaren Betätigungshebel 15 abgestützt, der quer zur Längsachse der Kupplung diese gabelförmig umgreift und bei 16 in einer beliebig ausgebildeten Führung festgehalten ist, die eine Hin- und Herbewegung des Betätigungshebels und Verschwenkung desselben um eine durch das Hebelende verlaufende Schwenkachse 18 erlaubt. Die Schwenkzapfen 19 drehen sich in am Kupplungsgehäuse 12 fest angeordneten Zapfenlagerungen 20. Die Funktion des Betätigungshebels 15 wird weiter unten beschrieben.

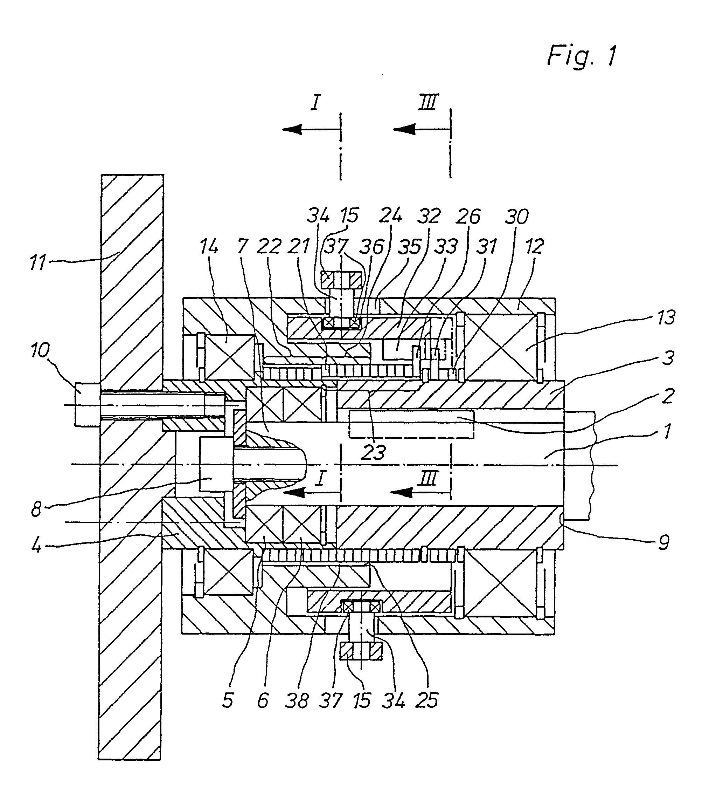

Die Kupplungs-Schlingfeder 21 umschliesst die Antriebsnabe 3 und die Abtriebsnabe 4 und weist zwei Abschnitte mit unterschiedlich grossem Duchmesser auf. Im Abschnitt 22 mit dem kleineren Durchmesser liegt die Kupplungs-Schlingfeder 21 mit grosser Vorspannung auf der Abtriebsnabe 4 auf. Im Abschnitt 23 ist der Innendurchmesser der Schlingfeder 21 grösser als der Aussendurchmesser der Antriebsnabe 3 und der Abtriebsnabe 4. Von diesem im Durchmesser grösseren Abschnitt 23 der Schlingfeder liegt eine Teillänge 24 mit Vorspannung innenseitig gegen eine Gehäusebohrung 25 im Kupplungsgehäuse 12 an, solange die Antriebsverbindung zwischen der Antriebsnabe 3 und der Abtriebsnabe 4 nicht hergestellt ist, bzw. kommt diese Teillänge 24 der Schlingfeder 21 nach Beendigung des eingekuppelten Zustandes, der in Fig. 1 in der unteren Hälfte dargestellt ist, wieder gegen die Gehäusebohrung 25 zur Anlage, wodurch die Schlingfeder abgebremst wird.

Die Kupplungs-Schlingfeder 21 weist an ihrem in Fig. 1 rechten Ende ein radial nach auswärts abgebogenes Federende 26 auf. Das andere Ende der nur mit Vorspannung festgehaltenen Schlingfeder 21 ist nicht festgehalten. In axialer Richtung anschliessend an die Kupplungs-Schlingfeder 21 ist eine weitere Schlingfeder 30 mit Vorspannung auf der Antriebsnabe 3 angeordnet, die ebenfalls ein radial nach aussen abgebogenes Federende 31 aufweist. Die Windungsrichtung dieser Feder ist entgegengesetzt zu der Windungsrichtung der Kupplungs-Schlingfeder 21. Ferner ist im Kupplungsgehäuse 12 eine in axialer Richtung hin- und herbewegbare sowie drehbare Schalthülse 32 angeordnet, die an ihrer Innenseite einen nockenförmigen Mitnehmer 33 aufweist. Dieser Mitnehmer 33 ragt in den Bereich des nach aussen abgebogenen Federendes 26 der Kupplungs-Schlingfeder 21 bzw. liegt dieses Federende 26 gegen den Mitnehmer 33 an. Die Hin- und Herbewegung der Schalthülse 32 erfolgt durch den vorerwähnten Betätigungshebel 15, der einander gegenüberliegend zur Achse der Kupplung gerichtete Bolzen 34 trägt, die sich durch einen als Langloch ausgebildeten Schlitz 35 im Gehäuse 12 hindurch und in eine am Aussenumfang der Schalthülse 32 ausgebildete Ringut 36 hineinerstrecken und am Bolzenende ein Wälzlager 37 tragen, weil der Bolzen 34 feststeht und die durch diesen bewegte Schalthülse 32 bei eingeschalteter Kupplung mit der Enddrehzahl rotiert.

Wenn die Schalthülse 32 durch den schwenkbaren Betätigungshebel 15 von der in Fig. 1 in der oberen Hälfte mit ausgezogenen Linien dargestellten Stellung nach rechts in die mit strichpunktierten Linien dargestellte Stellung verschoben wird, gelangt der Mitnehmer 33 in die Umlaufbahn des Federendes 31 der weiteren Schlingfeder 30, während der Mitnehmer 33 weiterhin gegen das Federende 26 der Kupplungs-Schlingfeder 21 anliegt, wie aus Fig. 1 und Fig. 2 hervorgeht. Durch diesen Formschluss der beiden Federenden wird die Kupplungs-Schlingfeder 21 geschlossen und dadurch die Antirebsnabe 3 reibschlüssig mit der Abtriebsnabe 4 verbunden, was in Fig. 1 in der unteren Hälfte dargestellt ist. Dabei entsteht dann auch zwischen der Gehäusebohrung 25 und der Teillänge 24 der Kupplungs-Schlingfeder 21 ebenfalls Spiel 38 wie beim anschliessenden Abschnitt 22 der Schlingfeder 21.

Damit das Einkuppeln in der vorbeschriebenen Art bei hoher Drehzahl nicht schlagartig erfolgt, muss die weitere Schlingfeder 30 so ausgelegt sein, dass sie zum einen Teil die Kupplungs-Schlingfeder 21 schliessen kann und dann durchrutscht, bis das konstante Reibungsmoment des Durchrutschens ein vollständiges Einkuppeln zur Folge hat. Da wie bereits erwähnt die beiden Schlingfedern 21 und 30 entgegengesetzte Windungsrichtung aufweisen, wird die Kupplungs-Schlingfeder 21 geschlossen, während die weitere Schlingfeder 30 sich so weit öffnet, dass sie durchrutscht.

Solange der Mitnehmer 33 der Schalthülse 32 die beiden Federenden 26 und 31 formschlüssig verbindet, bleibt die Abtriebsnabe 4 mit der Antriebsnabe 3 durch die Kupplungs-Schlingfeder 21 verbunden. Wenn die Schalthülse 32 wieder in die mit ausgezogenen Linien dargestellte Stellung nach links zurückverschoben wird, fehlt das Schliessmoment am Federende 26 der Kupplungs-Schlingfeder 21, so dass diese wieder die in Fig. 1 in der oberen Hälfte dargestellte Lage einnimmt, wobei sie im Bereich der Teillänge 24 der Schlingfeder in der Gehäusebohrung 25 abgebremst wird. Die Abtriebsnabe 4 mit der an dieser befestigten anzutreibenden Masse 11 dreht jedoch infolge des grossen Massenträgheitsmomentes noch weiter und wird durch das Reibungsmoment der Schlingfeder 21 im Abschnitt 22 dieser Feder abgebremst. Dabei lässt sich die Bremszeit auf einfache Weise durch die Wahl der Vorspannung der Schlingfeder 21 festlegen.

Die erfindungsgemässe Schlingfeder-Kupplung ist besonders geeignet für Antriebe mit hoher Drehzahl und mit einem vorhandenen hohen Massenträgheitsmoment, beispielsweise für den Messerantrieb eines durch einen Verbrennungsmotor angetriebenen Rasenmähers. Dabei lässt sich mit dem schwenkbaren Hebel 15 zum Ein- und Ausschalten eine Totmann-Schaltung für den Messerantrieb verwirklichen, bei der durch das Loslassen des Führungsholms des Mähers das Messer in sehr kurzer Zeit stillsteht, während der Motor weiterläuft.

## Patentansprüche

1. Schlingfeder-Kupplung mit einer Antriebsnabe (3) und einer Abtriebsnabe (4) sowie mit einer in zur Drehmomentübertragung geeigneter Weise koaxial zu den beiden Naben angeordneten Kupplungs-Schlingfeder (21), von welcher eine Teillänge (22) mit Vorspannung auf der in einem Gehäuse (12) drehbar gelagerten Abtriebsnabe (4) aufliegt und eine weitere Teillänge (23) im ausgekuppelten Zustand die an die Abtriebsnabe (4) axial anschliessende und im Gehäuse (12) drehbar gelagerte Antriebsnabe (3) mit radialem Spiel umschliesst, sowie mit einer Schalthülse (32) für die Kupplungsbetätigung, dadurch gekennzeichnet, dass axial anschliessend an die Kupplungs-Schlingfeder (21) eine weitere Schlingfeder (30) mit Vorspannung auf der Antriebsnabe (3) aufliegt und beide Schlingfedern (21, 30) radial auswärts abgebogene Federenden (26, 31) aufweisen, die zur Herstellung der Antriebsverbindung zwischen der Antriebsnabe (3) und der Abtriebsnabe (4) durch einen an der im Gehäuse (12) axial hin- und herbeweglichen und drehbaren Schalthülse (32) angeordneten Mitnehmer (33) formschlüssig kuppelbar sind, der bei ständiger Anlage gegen das Federende (26) der Kupplungs-Schlingfeder (21) in die Umlaufbahn des Federendes (31) der weiteren Schlingfeder (30) bewegbar ist, wodurch die Kupplungs-Schlingfeder (21) geschlossen und die Antriebsnabe (3) reibungsschlüssig mit der Abtriebsnabe (4) verbunden wird.

2. Schlingfeder-Kupplung nach Anspruch 1, dadurch gekennzeichnet, dass die Kupplungs-Schlingfeder (21) und die weitere Schlingfeder (30) entgegengesetzte Windungsrichtung aufweisen, derart, dass die weitere Schlingfeder (30) bei in ihre Umlaufbahn bewegtem Mitnehmer (33) geöffnet wird und durchrutscht, während die Kupplungs-Schlingfeder (21) gleichzeitig geschlossen wird.

3. Schlingfeder-Kupplung nach Anspruch 1, dadurch gekennzeichnet, dass die mit Vorspannung auf der Abtriebsnabe (4) aufliegende Teillänge (22) der Kupplungs-Schlingfeder (21) einen kleineren Durchmesser aufweist als die bei ausgeschalteter Kupplung die Antriebsnabe (3) mit radialem Spiel umschliessende Teillänge (23) der Kupplungs-Schlingfeder (21).

4. Schlingfeder-Kupplung nach Anspruch 3, dadurch gekennzeichnet, dass von der den grösseren Durchmesser aufweisenden Teillänge (23) der Kupplungs-Schlingfeder (21) bei ausgeschalteter Kupplung ein Abschnitt (24) der Schlingfeder (21) mit dem Aussenumfang mit Vorspannung innenseitig gegen eine Gehäusebohrung (25) zwecks Abbremsen der Abtriebsnabe (4) zur Anlage kommt.

5. Schlingfeder-Kupplung nach Anspruch 1, dadurch gekennzeichnet, dass die im Gehäuse (12) axial hin- und herbewegbare und drehbare Schalthülse (32) an der zylindrischen Innenseite den nockenförmigen Mitnehmer (33) aufweist und am Aussenumfang eine Ringnut (36) aufweist, in die sich von aussen einander gegenüberliegend je ein durch einen Schlitz (35) im Gehäuse (12) hindurch erstreckender Bolzen (34) zum Hin- und Herbewegen der Schalthülse (32) hineinerstreckt und die Bolzen (34) an einem das Gehäuse (12) gabelförmig umfassenden und um eine feststehende Schwenkachse (18) schwenkbaren Hebel (15) für das Ein- und Ausschalten der Schlingfeder-Kupplung befestigt sind.

6. Schlingfeder-Kupplung nach Anspruch 1, dadurch gekennzeichnet, dass die Antriebsnabe (3) auf einer Antriebswelle (1) drehfest angeordnet ist, auf deren Endabschnitt (7) mittels Wälzlagern (5, 6) die hohlzylindrische Abtriebsnabe (4) gelagert ist, und dass die Antriebsnabe (3) und die Abtriebsnabe (4) mittels axial anschliessend an die beiden Schlingfedern (21, 30) angeordneter Wälzlager (13, 14) im Kupplungsgehäuse (12) drehbar gelagert sind.

## Claims

1. Helical spring clutch with a driving hub (3) and a driven hub (4) as well as a helical clutch spring (21) arranged coaxially with the two hubs in a manner suitable for torque transmission, one segment (22) of the helical spring bearing with preloading against the driven hub (4) which is rotatably journalled in a housing (12) and another segment (23) in the disengaged state surrounding with radial play the driving hub (3) which axially adjoins the driven hub (4) and which is rotatably journalled in the housing (12), as well as a control sleeve (32) for clutch actuation, characterised in that a further helical spring (30) axially adjoining the said helical clutch spring (21) is applied with preloading to the driving hub (3) and both helical springs (21, 30) have radially outwardly bent spring ends (26, 31) which, in order to produce the driving connection between the driving hub (3) and the driven hub (4), are shape-lockingly couplable together by way of an entrainment member (33) arranged at the control sleeve (32) which is axially reciprocatable and rotatable in the housing (12), the entrainment member (33) being in constant engagement with the spring end (26) and being movable into the path of orbital movement of the spring end (31) of the further helical spring (30), whereby the helical clutch spring (21) is closed and the driving hub (3) is frictionally connected with the driven hub (4).

2. A helical spring clutch according to claim 1, characterised in that the helical clutch spring (21) and the further helical spring (30) have opposite senses of winding such that the further helical spring (30) is opened by the entrainment member (33) moving in its orbital path and slides through, while at the same time the helical clutch spring (21) is closed.

3. A helical spring clutch according to claim 1, characterised in that the segment (22) of the helical clutch spring (21) bearing with preloading against the driven hub (4) has a smaller diameter than the segment (23) of the further helical spring (30) surrounding the driving hub (3) with radial play when the clutch is disengaged.

4. A helical spring clutch according to claim 3, characterised in that when the clutch is disengaged, the outer circumference of a section (24) of the segment (23) of the further helical spring (30) with the greater diameter comes to bear with preloading against the inside of a bore (25) of the housing for the purpose of braking the driven hub (4).

5. A helical spring clutch according to claim 1, characterised in that the cam-shaped entrainment member (33) is provided at the cylindrical inner surface of the control sleeve (32) which is axially reciprocatable and rotatable in the housing (12) shaped entrainment member (33) and at its outer periphery has an annular groove (36) into which extend from the outside mutually oppositely lying bolts (34) extending through a slot (35) in the housing (12) to reciprocate the control sleeve (32), and the bolts (34) are secured to a lever (15) which surrounds the housing in a fork-like manner and which is pivotable about a fixed pivot axis (18) for the engagement and disengagement of the helical spring clutch.

6. A helical spring clutch according to claim 1, characterised in that the driving hub (3) is arranged rotationally fast on a driving shaft (1) on the end section (7) of which the hollow cylindrical driven hub (4) is journalled by way of roller bearings (5, 6), and in that the driving hub (3) and the driven hub (4) are rotatably journalled in the clutch housing (12) by means of roller bearings (13, 14) arranged axially adjacent to the two helical springs (21, 30).

**Revendications**

1. Accouplement par ressort enroulé avec un moyeu menant (3) et un moyeu mené (4) ainsi qu'avec un ressort enroulé d'accouplement (21) pour la transmission d'un couple de rotation, disposé d'une manière appropriée coaxialement aux deux moyeux, dont une longueur partielle (22) repose avec une tension préalable sur le moyeu mené (4) logé rotatif dans un carter (12) et une autre longueur partielle (23), à l'état découplé, entoure, avec un jeu radial, le moyeu menant (3) logé rotatif dans le carter (12) et se raccordant axialement au moyeu mené (4), ainsi qu'avec un manchon de commande (32) pour l'actionnement de l'accouplement, caractérisé en ce qu'un autre ressort enroulé (30) repose, avec tension préalable, sur le moyeu menant (3), qui est contigu axialement au ressort enroulé (21) d'accouplement, et les deux ressorts enroulés (21, 30) présentent des extrémités radiales de ressort (26, 31) courbées vers l'extérieur, qui peuvent être couplées, en liaison de forme, pour la production de la liaison d'entraînement entre le moyeu menant (3) et le moyeu mené (4), par un entraîneur (33) disposé sur le manchon de commande (32), mobile axialement en va-et-vient et rotatif, lequel entraîneur est mobile, dans le cas d'un appui constant contre l'extrémité de ressort (26) du ressort enroulé d'accouplement (21), dans le chemin parcouru par l'extrémité de ressort (31) de l'autre ressort enroulé (30), ainsi, le ressort enroulé d'accouplement (21) est fermé et le moyeu menant (3) se trouve relié, par friction, au moyeu mené (4).

2. Accouplement par ressort enroulé selon la revendication 1, caractérisé en ce que le ressort enroulé d'accouplement (2) et l'autre ressort enroulé (30) présentent des directions opposées d'enroulement de manière que l'autre ressort enroulé (30) soit ouvert par l'entraîneur (33) se déplaçant dans son chemin de parcours, et glisse, tandis que le ressort enroulé d'accouplement (21) est simultanément fermé.

3. Accouplement par ressort enroulé selon la revendication 1, caractérisé en ce que la longueur partielle (22) reposant avec tension préalable sur le moyeu mené (4) du ressort enroulé d'accouplement (21) présente un plus petit diamètre que la longueur partielle (23) du ressort enroulé d'accouplement (21) entourant, avec un jeu radial, le moyeu menant (3) lorsque l'accouplement est découplé.

4. Accouplement par ressort enroulé selon la revendication 3, caractérisé en ce que, de la longueur partielle (23) présentant le plus grand diamètre du ressort enroulé d'accouplement (21), lorsque l'accouplement est découplé, un tronçon (24) du ressort enroulé d'accouplement (21) vient reposer, par son pourtour externe, avec tension préalable, intérieurement, contre un perçage (4) du carter en vue du freinage du moyeu mené (4).

5. Accouplement par ressort enroulé selon la revendication 1, caractérisé en ce que le manchon de commande (32) mobile axialement en va-et-vient et rotatif dans le carter (12) présente, sur son côté interne cylindrique, l'entraîneur (33) en forme de came et, sur son pourtour externe, une rainure annulaire (36), dans laquelle s'étend chacun des boulons (34) mutuellement face à face et traversant une fente (35) dans le carter (12), pour le mouvement de va-et-vient du manchon de commande (32), et les boulons (34) sont fixés à un levier (15) entourant le carter (12) à la façon d'une fourche et pivotant autour d'un axe stationnaire de pivotement (18), pour la mise en circuit et hors circuit de l'accouplement par ressort enroulé.

6. Accouplement par ressort enroulé selon la revendication 1, caractérisé en ce que le moyeu menant (3) est placé, solidaire en rotation, sur un arbre menant (1), sur le tronçon extrême (7) duquel est logé le moyeu mené (4) cylindrique creux au moyen de roulements (5, 6), et en ce que le moyeu menant (3) et le moyeu mené (4) sont logés rotatifs dans le carter d'accouplement (12) au moyen de roulements (13, 14) axialement contigus aux deux ressorts enroulés (21, 30).

*Fig. 1*

Fig. 2

Fig. 3